# EUROPEAN PATENT APPLICATION

(11) **EP 0 926 801 A2**
(43) Date of publication of application: **30.06.1999**
(21) Application number: 98310304.5
(22) Date of filing: 16.12.1998
(51) Int. Cl.: H02K 1/27

(54) **Motor generator using permanent magnet**

(30) Priority: 26.12.1997 JP 36675197
(71) Applicant: ISUZU CERAMICS RESEARCH INSTITUTE CO., LTD., Fujisawa-shi, Kanagawa-ken (JP)
(72) Inventor: Kawamura, Hideo, Kouza-gun, Kanagawa-ken 253-0105 (JP)
(74) Representative: Jenkins, Peter David

(57) **Abstract**

Disclosed is a motor generator using permanent magnets, in which plate-like elements of permanent magnet are arranged in the form of a regular prism so as to provide a rotor of larger diameter. The rotor(5) may be produced inexpensively and capable of ensuring the lightweight as well as high-speed rotation of the rotor with the larger electric output. The rotor(5) is comprised of plate-like elements(10) of permanent magnet(3) arranged adjacently in a regular prism, resinous materials filled in clearances among the plate-like elements(10), laminated permeable elements (9) disposed around the regular prism of the plate-like elements(10), non-magnetic reinforcing members(4) encompassing the perimeter of the laminated permeable elements(10), and permeable elements(8) mounted to a rotating shaft(2) and arranged in the regular prism of the plate-like elements(10). The plate-like elements (10) may be fabricated more inexpensive in short time in comparison with the arced permanent magnets(3). The integrated rotor of a desired diameter may be provided easily with accuracy by merely changing the number and size of the plate-like elements(10).

## Description

The present invention relates to a motor generator using a unit permanent magnet, which comprises a rotor having permanent magnets arranged around a large-diametral rotating shaft which is supported for rotation in a housing, and a stator mounted in the housing so as to be arranged around the rotor.

Conventionally, the improvements in performance of permanent magnet have resulted in increasing the opportunities for employing the permanent magnets as the rotors of the motor generators. Recently used in various industrial apparatus and instruments have been the motor generators and motors having the rotors of the permanent magnets for the advantages of high dynamoelectric efficiency and simple structure.

The cylindrical permanent magnet may have been usually produced by filling a non-magnetic cylindrical mold with an alloy powder containing elements of iron, samarium, neodymium, cobalt and the like, pressing compressively the alloy powder in the mold under high temperature to consolidate the powder into a dense form, sintering instantaneously the dense form by highfrequency heating under the application of magnetic field, or the N-S polarity, so as to concentrate magnetic lines of force in the alloy. The sintered product is then separated out of the mold as the cylindrical permanent magnet. The sintered product of permanent magnet is finished to size by grinding the inside and outside of the product. In the meantime a thin-walled shell of carbon filament windings provides a reinforcing member for the sintered product. Press-fitting the sintered permanent magnets into the shell results in the integrated rotor.

The rotating speed of the rotor may increase proportionally to the increase of the impressed voltage and current and hence the large centrifugal force generates in the rotor. In order to protect the rotor from its burst owing to the large centrifugal force, the prior rotor of this type has been in general provided with the reinforcing rings that encompass the perimeter of the permanent magnets to thereby withstand the centrifugal force.

With reference to the prior motor generator having the rotor of permanent magnet, there are, for example, a rotary motor generator disclosed in Japanese Utility Model Laid-Open No. 162977/1985, and a rotating machine with permanent magnets disclosed in Japanese Patent Laid-Open No. 272850/1987.

The rotating machine with permanent magnets in the above-cited No. 272850/1987 has a rotor which is provided with permanent magnets and compartments for forming pole shoes, the compartment containing therein magnetic substance movable radially of the rotor due to the rotation of the rotor.

Japanese Patent Laid-Open No. 236260/1995 discloses a larger-output a-c motor generator that is to control the generated output by varying the magnetic flux density in accordance with the rotating velocity, and comprises a control ring disposed between a rotor and stator for relative movement, and a magnetically-permeable member making into or out of contact with the control ring.

Meanwhile it is well known diesel particulate filters for purifying exhaust gases out of engines. Such particulate filters usually have heating means for regeneration of the filter to burn out particulate including carbon, smoke, HC, SOₓ and the like. The heating means is to be energized with electric power from a generator or battery equipped in the vehicle, nevertheless there is no guarantee in vehicles that sufficient electric power is always ready for heating.

Refrigerator lorries in general are provided with evaporators, compressors and generators for operating the compressors or the like. On stopping the engine in such lorry, the generated electric power in the generator decreases rapidly resulting in immobility of the refrigerator. To cope with this, some prior lorries have extra motors which may be energized by another electric source, or commercial a-c source at 100 volts, to operate the compressors.

A proposal for solving the problems described above is to make the generator larger, which is capable of generating a large electric power to be stored in batteries or directly used for operating heaters and compressors. Enlarging the generator, however, raises other questions about the production cost, spacing for accommodating such generator.

As the generated electric power by the motor generator having the rotor of permanent magnets is defined as the product of the rotating speed multiplied by the magnetic field intensity, the faster the rotating speed is, the greater the generated electric power is. Moreover, it will be understood that the magnetic field intensity is given by the product of the magnetic force multiplied by the area of the permanent magnets.

It is usually very hard to produce a cylindrical permanent magnet having a large radius and thus it is very difficult to make the rotor larger in diameter. As far as the rotor is made of permanent magnets, therefore, there seems to be no hope of large electric power generated. On the other hand, raw materials such as iron, neodymium, samarium, cobalt or the like are high in cost and thus the permanent magnets are required to make them with higher cost efficiency. As will be seen from the foregoing, the larger the permanent magnets are, the greater the rotor. To cope with this, it will be inevitably designed to produce the permanent magnets assembling many divided segmental magnets. In such design, it is also important how to divide the cylinder into segments.

It will be further necessary to take any measure to protect the permanent magnets from the burst of the permanent magnets owing to the strong centrifugal force which will be applied to the permanent magnets on high-speed rotation of the rotor. Advanced new structure has been required to enhance the mechanical strength of the assembled permanent magnets. In the motor generator adaptable to generate a high output by the high rotation of the rotor, there have been questions about how design the permanent magnets to produce the rotor light in weight as well as greater in rigidity so as to withstand the high-speed rotation of the rotor.

The present invention is developed with reference to the plate-like permanent magnets of sintered body of iron or neodymium powder resulting in remarkable reduction of in production cost. An aim of the present invention is to provide a motor generator using permanent magnets in a rotor, which is capable of ensuring the sufficient rigidity of the rotor with light weight as well as high-speed rotation of the rotor with the larger electric output.

Another aim of the present invention is to provide a motor generator which is comprised of a rotating shaft of a large diameter, plate-like elements of permanent magnet disposed in the configuration of regular prism, the plate-like elements being arranged in such a manner that N-pole and S-pole are alternately positioned around the shaft, permeable elements and laminated permeable elements securing the plate-like elements in a sandwiched relation therebetween, reinforcing members of non-magnetic substance encompassing the perimeter of the laminated permeable elements to therewith firmly reinforce the arrangement of the rotor, and resinous materials filled in clearances between the laminated permeable elements and the plate-like elements and consolidated therein.

A further aim of the present invention is to provide a motor generator using permanent magnets, comprising a rotating shaft supported for rotation in a housing, a rotor mounted on the shaft, a stator arranged along a perimeter of the rotor and secured to the housing, the rotor being composed of plate-like elements of permanent magnets disposed in the form of a regular prism, laminated permeable elements having an arced perimeter and arranged in contact with the plate-like elements, magnetically permeable elements of a regular prism arranged in contact with the plate-like elements and mounted on the rotating shaft, reinforcing members of non-magnetic substance arranged along a perimeter of the laminated permeable elements, and resinous materials impregnated in clearances between the plate-like elements and laminated permeable elements and having consolidated therein.

Another aim of the present invention is to provide a motor generator using permanent magnets wherein the plate-like elements of permanent magnet are disposed in such a manner that any one of the magnetic poles is alternately arranged inside the magnet array around the shaft, whereas the other of the poles is alternately arranged outside the magnet array and also the opposite edges of the adjacent plate-like elements are reverse to each other in magnetic polarity.

Another aim of the present invention is to provide a motor generator using permanent magnets, wherein the laminated permeable elements are of a plurality of silicon steel sheets which are stacked along the axial direction of the rotor.

A further aim of the present invention is to provide a motor generator using permanent magnets, wherein the laminated permeable elements are of arced segmental members having the chordal surfaces in contact the plate-like elements and arced perimetric surfaces, and the arced segmental members are each arranged in opposition to the plate-like elements and connected with each other at the opposing longitudinal edges thereof.

A further aim of the present invention is to provide a motor generator using permanent magnets, wherein the reinforcing members are comprised of any one of windings of non-magnetic carbon filament, metal windings and thin plates.

Another aim of the present invention is to provide a motor generator using permanent magnets, wherein the resinous material is mixed with any one of ceramic fibers and carbon fibers, which is higher in thermal conductivity for improving the thermal conduction of the resinous materials.

According to the motor generator comprising plate-like elements of permanent magnet, which are disposed in regular prism, the plate-like elements may be fabricated more inexpensive in short time in comparison with the arced permanent magnets. The unit permanent magnet of a desired dimension may be provided easily with accuracy by merely changing the number and size of the plate-like elements. Moreover the permeable elements may be controlled depending on the dimension of the plate-like elements of permanent magnet while the integrated rotor of a desired dimension may be produced easily, inexpensively by determining the size of the laminated permeable elements and the number of the laminated silicon steel elements. The rotor may be made larger as a whole and therefore there may be provided the large-scaled, high-speed motor generator which is greater in generated output.

In the rotor having the plate-like elements of permanent magnet arranged between the laminated permeable elements and permeable elements, further, resinous materials may be filled in clearances among and/or between the adjoining plate-like elements of permanent magnet, the laminated permeable elements and permeable elements whereby the magnetic flux leaks are prevented and thus the generated electric output may increases.

Since the permeable elements inside the regular prism of the plate-like elements of permanent magnet are of open-cellular bodies which filled with the resinous materials, the rotor may be made larger in diameter, nevertheless the rotor itself may be reduced in weight, so that the rotor contributes to the production of the high-speed, high-output motor generator.

As described above, enlarging the permanent magnets in diameter results in the high peripheral speed of the rotor with the great electric output being generated.

According to another aspect of this invention, the laminated permeable elements are encompassed with the cylindrical reinforcing member of thin plates or windings, which are made of stainless steel, carbon fibers or ceramic fibers impregnated with resinous material. This makes it possible to enhance the strength against the burst owing to the centrifugal force and helps ensure the easy production of the rotor.

The plate-like permanent magnets are arranged between the permeable elements and the laminated permeable elements that are in turn surrounded with the cylindrical reinforcing member of thin plates or windings, which are of stainless steel, carbon fibers or ceramic fibers impregnated with resinous material. The rotor may be easily assembled which includes therein plate-like permanent magnets reinforced in strength. Impregnation of the resinous materials in the clearances among the plate-like permanent magnets and laminated permeable elements or in the reinforcing member makes it possible to finish easily, preciously the rotor by grinding machines resulting in the reduction in production cost.

The motor generator of the present invention may withstand the high-speed rotation and hence be adapted to a generator converting kinetic rotating energy to electric energy in engines of cogeneration systems or hybrid cars.

For example, the motor generator of the present invention equipped in the vehicle, even if the engine stops, may continue to supply the sufficient electric power for regeneration to the heating means of the diesel particulate filter purifying the exhaust gases from the engine. Refrigerator lorries provided with the motor generator of this invention may be supplied with the electric power for operating the compressors or evaporator and thus the lorries will be free from the external electric source as in the prior refrigerator lorries.

Other aims and features of the present invention will be more apparent to those skilled in the art on consideration of the accompanying drawings and following specification wherein are disclosed preferred embodiments of the invention with the understanding that such variations, modifications and elimination of parts may be made therein as fall within the scope of the appended claims without departing from the spirit of the invention.

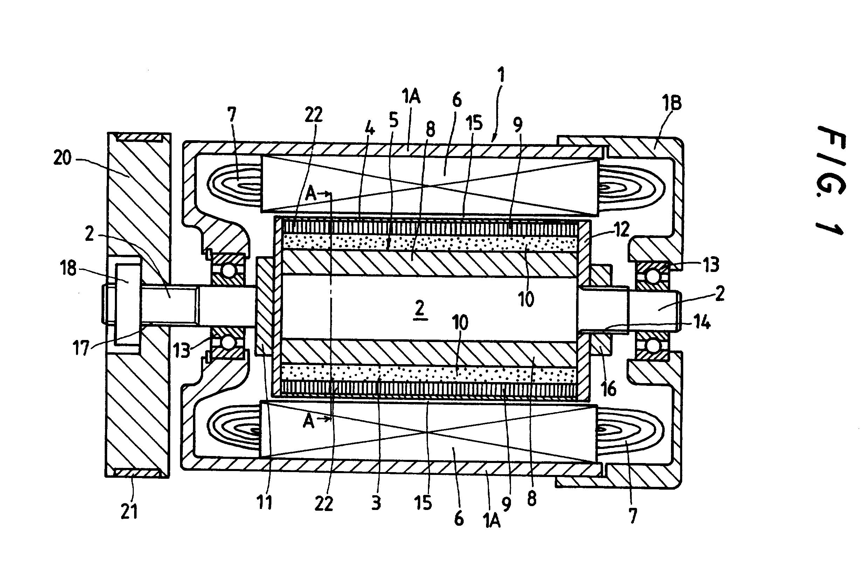

An embodiment of the present invention will now be described, by way of example only, with reference to the accompanying drawings in which:-
FIG. 1 is an axial sectional view showing a preferred embodiment of a motor generator employing a unit permanent magnet in accordance with the present invention;
FIG. 2 is a cross-sectioned view of a first embodiment of the rotor in the motor generator shown in FIG. 1 and is taken along the line A-A of FIG. 1; and
FIG. 3 is a cross-sectioned view of a second embodiment of the rotor in the motor generator shown in FIG. 1 and is taken along the line A-A of FIG. 1.

A motor generator using a unit permanent magnet of the present invention may be used for constituting a larger motor generator capable of operating as a motor by the instructions of the controller or producing electricity through a rotating shaft 2 that is drivingly connected with the torque output shaft of the engine of, for example, the hybrid car in which the engine is combined with the motor generator, and the cogeneration system.

A preferred embodiment of the motor generator according to the present invention is comprised of a housing 1 formed by a pair of housing halves 1A and 1B, a large-diametral rotating shaft 2 supported for rotation in the housing 1 by means of a pair of axially opposed bearings 13, a rotating element or a rotor 5 of permanent magnet secured to the shaft 2, and a stator 6 secured to the housing 1 around the rotor 5 so as to provide an annular gap or clearance 15 between the rotor 5 and stator 6.

The rotor 5 abuts at one end thereof against a stopper 11 and is fixed at opposite end thereof to the shaft 2 through a cover plate 12 by means of a fixture nut 16 which is screwed on a threaded portion 17 of the shaft 2. The rotating shaft 2, as shown in the drawings, is further provided at one end thereof with a belt pulley 20 which is secured, for example, by means of a nut 18 screwed on a threaded end portion 17 of the shaft 2. An endless belt 21 connects drivingly the belt pulley 20 with a belted torque output shaft of an engine. The stator 6 is of layered thin plates wound together with windings 7.

The motor generator of this invention has the structural characteristic in the rotor 5 fixed to the shaft 2, more particularly, in the combination of magnetically-permeable elements 8, plate-like elements 10 and laminated permeable elements 9 for constituting the rotor 5. The rotor 5 is comprised of the magnetically-permeable elements 8 mounted on the shaft 2, the permeable elements each having an outer periphery of polygonal prism, the plate-like elements 10, or the permanent magnets 3, secured around the periphery of the permeable elements 8, and the laminated permeable elements 9 secured over the plate-like elements 10 and having outer peripheries of right circular cylinder. The rotor 5 further includes non-magnetic reinforcing members 4 secured over the laminated permeable elements 9, and resinous materials, or resins 19, impregnated and solidified in clearances between the adjacent plate-like elements 10 and magnetically-permeable elements 9.

The plate-like elements 10, or the permanent magnets 3, are disposed in the configuration of regular prism and the resins 19 are arranged in boundaries between the opposite edges of the adjacent plate-like elements 10 whereby the plate-like elements 10 are assembled together in the form of the regular prism. The plate-like elements 10 are disposed in such a manner that any one of the magnetic poles, or N-pole and S-pole, is alternately arranged inside the magnet array around the shaft, whereas the other of the poles is alternately arranged outside the magnet array and also the opposite edges of the adjacent plate-like elements 10 are reverse to each other in magnetic polarity, or N-pole and S-pole.

Mounted over the plate-like elements 10 of right prism are the laminated permeable elements 9 composed of silicon steel sheets 22 which are stacked along the axial direction of the rotor so as to reduce the magnetic resistance in magnetic paths and prevent the eddy-current loss. The laminated silicon steel sheets 22 are, as a whole, of arced members 23 of a segmental prism, the chordal surfaces of which are in contact with the plate-like elements 10. The arced members 23 are each arranged in opposition to the plate-like element 10 and connected with each other at the opposing longitudinal edges thereof by, for example, welding at 24.

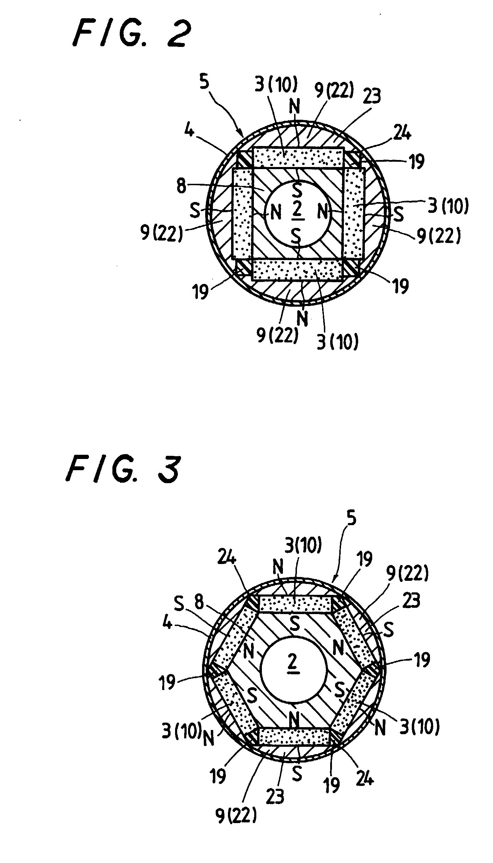

In accordance with FIG. 2, the plate-like elements 10 are comprised of four elements disposed in quadratic prism, and the four resins 19 are arranged between the opposite edges of the adjacent plate-like elements 10 whereby the plate-like elements 10 are assembled together in the form of the quadratic regular prism. As an alternative, the plate-like elements 10 shown in FIG. 3 are of six elements disposed in hexagonal prism, and the six resins 19 are arranged between the opposite edges of the adjacent plate-like elements 10 whereby the plate-like elements 10 are assembled together in the form of the hexagonal regular prism.

The reinforcing members 4 of the rotor 5 may be made of non-magnetic carbon fibers or ceramic fibers molded with resins. Alternatively, the reinforcing members 4 may be made of carbon filament, which are wound in a tubular form and molded with resin equivalent with the resins 19. The reinforcing members 4 are wound around the periphery of the laminated permeable elements 9 arranged over the plate-like elements 10, or the permanent magnets 3, to therewith firmly reinforce the arrangement of the permanent magnets 3. It will be noted that the reinforcing member 4 may be made of non-magnetic stainless steel cylinder and resins 19 are impregnated and solidified in the clearances between the adjacent plate-like elements 10 and the laminated permeable elements 9.

The resins 19 between the adjacent plate-like elements 10, or the permanent magnets 3, in the rotor 5 may be mixed with ceramic fibers or carbon fibers higher in thermal conductivity for improvement in strength and thermal conduction. As an alternative, the resins 19 may be mixed with ceramic fibers of AlN, SiC or the like, higher in thermal conductivity for improving the strength and thermal conduction of the resin. The resins 19 impregnated in the laminated permeable elements 9 further contain powdered iron therein to enhance the magnetic permeability. The resinous material impregnated in the laminated permeable elements 9 may be identical with the resins 19 between the plate-like elements 10.

It will be understood that the faster the rotor 5 runs on generation of electricity, the greater the generated electric power is, nevertheless the greater is the centrifugal force.

The motor generator of the present invention is designed as described above and preferably adapted to a motor generator having a rotor of a larger diameter more that 100 mm, because of the greater resistance against the centrifugal force occurring in the high-speed driven type as well as the good dynamic balance in rotation. In the prior rotor in the lager motor generator, the permanent magnets are required to reduce them to the minimum size for cost saving. Whereas the permanent magnets in the rotor 5 of the present invention are of plate-like elements 10, resulting in reduction in size and in production cost.

For increasing the strength of the permanent magnets against the centrifugal force, the rotor 5 further includes the reinforcing members 4 of non-magnetic substance such as stainless steel, ceramic fibers or carbon fibers, the reinforcing members 4 encompassing the permanent magnets 3 to therewith firmly reinforce the arrangement of the permanent magnets 3 whereby the rotor 5 may be protected against the burst owing to the centrifugal force.

Concentrically-multilayered cylinders of silicon steel superior in magnetic permeability may be substituted for the laminated permeable elements 9. The permanent magnets 3 are fitted in the unit cylinder along recesses inside the cylinder, which is then nested in the reinforcing member 4 of stainless steel cylinder.

Arranging the magnetically permeable elements 8 inside the plate-like elements 10, or the permanent magnets 3, is capable of making the whole rotor larger with the result of increasing the strength and rigidity. The permeable elements 8 may be made of any ceramics or metals. The permeable elements 8 fixed to the shaft 2 may results in the large diameter of the unit shaft comprising the permeable elements 8 and rotating shaft 2. Moreover for reducing the weight of the unit shaft, it will be recommended to substitute the permeable elements 8 for an open-cellular body of ceramics or alloy, the cell of which is filled with the resin so that the rotor is as a whole made less in weight. The rotor 5 is integrated by further filling the resinous materials all over in the clearances that may exist among the stainless steel cylinders of the reinforcing member 4, the plate-like elements 10, or the permanent magnets 3, and magnetically-permeable elements 8.

The rotor 5 assembled as described above may become higher in rigidity as well as less in weight, so that it is able to withstand the high-speed rotation resulting in taking out the high output.

The following explains about the production method of the permanent magnets 3 used in the rotor 5. The plate-like elements 10 of permanent magnet are produced by the steps of, filling a rectangular mold with a magnetic powder containing elements of, for example, iron, samarium, neodymium and the like, pressing the magnetic powder in the mold under high temperature to consolidate the powder into a plate-like dense form, and sintering the dense form under the application of magnetic field so as to create a magnetic polarity along a predetermined direction resulting in magnetic lines of force being concentrated. It is to be noted that the plate-like dense form, prior to sintering, has to be dressed for making the finished product with dimensional precision. The sintered product is finally separated out of the mold as the plate-like element 10 of permanent magnet. In the meantime the laminated permeable elements 9 of the silicon steel sheets 22 are prepared for the purpose of reinforcing the sintered plate-like elements 10. The windings of carbon filament then encompass along the perimeter of the laminated permeable elements 9 to thereby provide a cylindrical shell of thin wall. The cylindrical shell is then set in a plaster mold assembled with a core and the permeable elements 8 are fitted between the plate-like elements 10 and the core. A cover is disposed on and secured to the plaster mold.

The resin 19 mixed with carbon fibers is forced from a pressured tank through a passage in the cover into the mold. The resin 19 spreads over all in clearances between the adjoining plate-like elements 10, between the core and permeable elements 8, between the plate-like elements 10 and laminated permeable elements 9, and between the adjacent laminated permeable elements 9 and consolidates therein. The cavity of the mold is preferably reduced in pressure under high temperature for more rapidly spreading the molten resin into the clearances. It will be thus understood that the rotor 5 may be provided in that the permanent magnets 3 are firmly anchored in integration with the carbon fibers in the reinforcing members 4 by means of the molten resin that is impregnated under pressure into the clearances among the laminated silicon steel sheets 22 of the laminated permeable elements 9 through the clearances between the adjoining plate-like elements 10. The integrated rotor 5 is separated out of the plaster mold. The rotor 5 is assembled to the motor generator by fitting the rotating shaft 2 in the permeable elements 8 and screwing the nut 16 on the threaded potion 14 of the rotating shaft 2.

While the present invention has been described in its preferred embodiments, it is to be understood that the words which have been used are words of description rather than limitation and that changes within the purview of the appended claims may be made without departing from the true scope and spirit of the invention in its broader aspects.

## Claims

1. A motor generator using permanent magnets, comprising a rotating shaft(2) supported for rotation in a housing(1), a rotor(5) mounted on the shaft(2), a stator(6) arranged along a perimeter of the rotor(5) and secured to the housing(1), the rotor(5) being composed of plate-like elements(10) of permanent magnet (3) disposed in the form of a regular prism, laminated permeable elements(9) having an arced perimeter and arranged in contact with the plate-like elements(10), magnetically permeable elements(8) of a regular prism arranged in contact with the plate-like elements(10) and mounted on the rotating shaft(2), reinforcing members(4) of non-magnetic substance arranged along a perimeter of the laminated permeable elements(9), and resinous materials(19) impregnated in clearances between the plate-like elements(10) and laminated permeable elements(9) and having consolidated therein.

2. A motor generator using permanent magnets according to claim 1, wherein the plate-like elements (10) of permanent magnet(3) are disposed in such a manner that any one of the magnetic poles is alternately arranged inside the magnet array around the shaft, whereas the other of the poles is alternately arranged outside the magnet array and also the opposite edges of the adjacent plate-like elements(10) are reverse to each other in magnetic polarity.

3. A motor generator using permanent magnets according to claims 1 or 2, wherein the laminated permeable elements(9) are of a plurality of silicon steel sheets(22) which are stacked along the axial direction of the rotating shaft(2).

4. A motor generator using permanent magnets according to any one of claims 1 to 3, wherein the laminated permeable elements(9) are of arced segmental members(23) having the chordal surfaces in contact the plate-like elements(10) and arced perimetric surfaces, and the arced segmental members(23) are each arranged in opposition to the plate-like elements(10) and connected with each other at the opposing longitudinal edges thereof.

5. A motor generator using permanent magnets according to any one of claims 1 to 4, wherein the reinforcing members(4) are comprised of any one of windings of non-magnetic carbon filament, metal windings and thin plates.

6. A motor generator using permanent magnets according to any one of claims 1 to 5, wherein the resinous material(19) is mixed with any one of ceramic fibers and carbon fibers, which is higher in thermal conductivity for improving the thermal conduction of the resin.
